(19) Europäisches Patentamt
European Patent Office
Office européen des brevets

(11) **EP 1 995 010 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
**B23F 5/04** (2006.01)       **B23F 19/00** (2006.01)

(21) Anmeldenummer: **07010133.2**

(22) Anmeldetag: **22.05.2007**

(54) **Diagonalwälzverfahren zur Erzeugung von Flanken mit vorgegebener Schränkung bei vorgegebener Breitenballigkeit**

Diagonal milling method for creating crowned tooth flanks with pre-defined offsets

Procédé de laminage diagonal destiné à la production de flancs dotés d'un décalage prédéfini pour convexité prédéfinie

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**26.11.2008 Patentblatt 2008/48**

(73) Patentinhaber: **GLEASON-PFAUTER, Maschinenfabrik GmbH**
**71636 Ludwigsburg (DE)**

(72) Erfinder: **Faulstich, Ingo, Dr.-Ing.**
**71634 Ludwigsburg (DE)**

(74) Vertreter: **Leinweber & Zimmermann**
**European Patent Attorneys**
**Patentanwälte**
**Rosental 7**
**80331 München (DE)**

(56) Entgegenhaltungen:
**EP-A- 1 036 624      DE-A1- 3 816 270**
**DE-C1- 4 012 432      US-A- 5 765 974**

## Beschreibung

Die Erfindung betrifft ein Verfahren zur Bearbeitung der Flanken im Wesentlichen zylindrischer, aber breitenballig modifizierter Verzahnungen im kontinuierlichen Diagonal-Wälzverfahren nach dem Oberbegriff des Anspruches 1.

Bei der Erzeugung schrägverzahnter breitenballiger Zylinderräder im kontinuierlichen Wälzverfahren entstehen verwundene Flanken. Ein Maß für die Verwindung ist die Schränkung. Es besteht die Forderung, die Schränkung zu vermeiden oder eine von der "natürlichen Schränkung" abweichende Schränkung zu erzeugen.

Zur Lösung der Aufgabe, die Schränkung zu vermeiden, ist bekannt (DE 37 04 607), die Verzahnung im kontinuierlichen Diagonal-Wälzverfahren zu bearbeiten und dabei ein schneckenförmiges Werkzeug einzusetzen, dessen Eingriffswinkel der Rechts- bzw. Linksflanken von einem Maximalwert an einem Ende der Schnecke ausgehend zum anderen Ende hin kontinuierlich abnimmt, wobei der maximale Eingriffswinkel der Rechtsflanken an einem Ende der Schnecke mit dem minimalen Eingriffswinkel der Linksflanken zusammenfällt und umgekehrt. Dieses Werkzeug ist sehr aufwändig in der Herstellung und wenig flexibel im Einsatz.

In EP 1 036 624 A2 wird vorgeschlagen, eine steigungshöhenmodifizierte Schnecke als Werkzeug einzusetzen. Bei diesem Werkzeug ändert sich die Steigungshöhe der Flanken von einem Ende der Schnecke ausgehend zum anderen Ende hin proportional zum Abstand vom Schneckenende, wobei die maximale Steigungshöhe der einen Flanke an einem Ende der Schnecke mit der minimalen Steigungshöhe der anderen Flanke an diesem Schneckenende zusammenfällt und umgekehrt. Ein derartiges Werkzeug ist breitenballig oder breitenhohl. Das Werkzeug soll im Diagonalverfahren arbeiten. Hält man während der Bearbeitung eines Werkstückes in Zweiflankenbearbeitung den Achsabstand zwischen Werkzeug und Werkstück konstant, so entstehen auf beiden Flanken des Werkstückes eine Breitenballigkeit - von außen konvex (positiv) oder von außen konkav (negativ) - und eine Schränkung.

Ändert man für das Bearbeiten eines weiteren Werkstückes lediglich das Vorzeichen des Diagonalverhältnisses D, also die Richtung, in der das Werkzeug während der Axialschlittenverschiebung in Richtung seiner Drehachse verschoben wird, so entstehen auf beiden Werkstückflanken ebenfalls eine Breitenballigkeit und eine Schränkung. Die Schränkung besitzt allerdings gegenüber dem vorher bearbeiteten Werkstück unterschiedlichen Betrag und entgegengesetztes Vorzeichen.

In EP 1 036 624 A2 wird nun vorgeschlagen, einen Anteil von Breitenballigkeit und Schränkung über eine Änderung des Achsabstandes während der Axialschlittenverschiebung und einen zweiten Anteil über das im Diagonalverfahren arbeitende Werkzeug zu erzeugen und die Balligkeit des Werkzeuges sowie die Einstelldaten der Maschine so aufeinander abzustimmen, dass die gewünschten Werte für Breitenballigkeit und Schränkung am Werkstück entstehen.

Aus der EP geht hervor, wie man aus einer Breitenballigkeit, die über eine Änderung des Achsabstandes während der Axialschlittenverschiebung erzeugt worden ist, die zugehörige Schränkung berechnen kann. Die Ausführungen in [0051] bis [0054] belegen, dass die EP 1 036 624 A2 davon ausgeht, dass die Schränkung, die aus einer Breitenballigkeit, erzeugt über ein im Diagonalverfahren eingesetztes steigungshöhenmodifiziertes Werkzeug, erfindungsgemäß genau so berechnet werden kann, wie die Schränkung, die aus einer Breitenballigkeit resultiert, die über eine Achsabstandsänderung während der Bearbeitung erzeugt wurde.

Beim Einsatz eines steigungshöhenmodifizierten Werkzeuges im Diagonalverfahren entsteht zwar ein Anteil der Schränkung, wie er in der EP angegeben ist; dieser Anteil unterscheidet sich bei gleichem Betrag der Breitenballigkeit aber nicht von einem Anteil der Schränkung, der aus einer Achsabstandsänderung während der Axialschlittenverschiebung resultiert. Eine Änderung des Vorzeichens von D ändert diesen Anteil der Schränkung nicht.

Beim Einsatz eines steigungshöhenmodifizierten Werkzeuges entsteht allerdings zusätzlich ein bisher unbekannter Anteil der Schränkung. Nur über diesen Anteil lässt sich bei gegebenem Betrag der Breitenballigkeit die Schränkung der Verzahnung beeinflussen. Das in der EP vorgeschlagene Verfahren ist demzufolge nicht in der Lage, bei gegebener Breitenballigkeit die Schränkung zu vermeiden oder gar eine von der "natürlichen Schränkung" gezielt abweichende Schränkung zu erzeugen.

Der Erfindung liegt die Aufgabe zugrunde, das gattungsgemäße Verfahren so auszubilden, dass breitenballig modifizierte Flanken im Ein- bzw. Zweiflankenprozess mit praktisch beliebiger.Schränkung erzeugbar sind, dass geometrisch einfache Werkzeuge eingesetzt werden können und dass die für das Bearbeiten benötigte Werkzeuglänge in weiten Grenzen frei wählbar ist.

Diese Aufgabe wird beim gattungsgemäßen Verfahren nach Anspruch 1 gelöst.

Durch die Abstimmung von Betrag und Verlauf der Balligkeit des Werkzeuges mit dem Diagonalverhältnis wird mit einem einfachen Werkzeug eine Schränkung erzeugt, die der natürlichen Schränkung überlagert wird und so die für das Werkstück geforderte Schränkung ergibt. Außerdem wird dem Anteil der Balligkeit des Werkstückes, der aus der Balligkeit des Werkzeuges beim Arbeiten im Diagonalverfahren hervorgeht, ein weiterer Anteil der Balligkeit überlagert, sodass resultierend die geforderte Balligkeit am Werkstück vorliegt, wobei dieser weitere Anteil der Balligkeit über eine Änderung des Abstandes zwischen Werkzeug und Werkstück während der Bearbeitung erzeugt wird. Es ist möglich, die geforderten Werte für Breitenballigkeit und Schränkung des Werkstückes mit Werkzeugen zu verwirklichen, deren Länge in weiten Grenzen frei wählbar ist. Die Werkzeuge müssen dann mit ihrer Balligkeit an diese Länge angepasst werden. Durch die vorgeschlagenen Maßnahmen wird die gestellte Aufgabe in einfacher Weise mit einfachen Werkzeugen gelöst.

Weitere Merkmale der Erfindung ergeben sich aus den weiteren Ansprüchen, der Beschreibung und den Zeichnungen. Die Erfindung wird anhand der folgenden Zeichnungen näher erläutert. Es zeigen:

Fig. 1   ein Werkzeug 0, ein Werkstück 2 sowie Achsen einer Bearbeitungsmaschine zur Beschreibung von Positionen, Strecken und Bewegungen,

Fig. 2   eine Darstellung zur Bestimmung der Flankentopographie der Links- und der Rechtsflanken einer rechtsschrägen Verzahnung mit Breitenballigkeit, erzeugt im Diagonal-Wälzverfahren mit zylindrischem Werkzeug,

Fig. 3   eine Darstellung zur Bestimmung der Flankentopographie einer Rechtsflanke einer rechtsschrägen Verzahnung mit Breitenballigkeit, erzeugt im Diagonal-Wälzverfahren mit hohlballig modifiziertem Werkzeug,

Fig. 4   eine Darstellung zur Zuordnung der Achsen Y und Z und zur Erläuterung der Form von Erzeugungsberührspuren beim Bearbeiten der Rechtsflanke einer rechtsschrägen Verzahnung im Diagonal-Wälzverfahren mit hohlballig modifiziertem Werkzeug sowie zur Erläuterung der dabei entstehenden Breitenballigkeit,

Fig. 5   den Zusammenhang zwischen dem Vorzeichen des Diagonalverhältnisses und dem Vorzeichen des Anteils des Schränkung, über den die Schränkung der betrachteten Flanke auf den geforderten Wert gebracht wird,

Fig. 6   ein Verfahren zur Erzeugung einer Balligkeit oder Hohlballigkeit an einem schneckenförmigen Werkzeug.

Anhand der folgenden Betrachtungen wird erläutert, wie beim Bearbeiten schrägverzahnter, breitenballiger Zylinderräder im kontinuierlichen Wälzverfahren die Schränkung der Flanken entsteht, wie man sie vermeiden oder auf ein gewünschtes Maß bringen kann, und wie die dazu erforderlichen Werkzeuge ausgelegt werden.

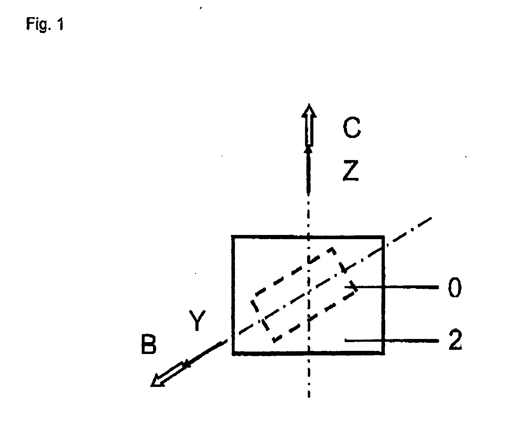

Die Betrachtungen gehen aus von einer Maschine mit vertikaler Werkstückdrehachse, wie sie vom Wälzfräsen her bekannt ist. Die Achsen zur Beschreibung von Positionen, Wegen und Bewegungen (Fig. 1) sind:

X   Achsabstand (radial)
Y   Werkzeugachsrichtung (tangential)
Z   Werkstückachsrichtung (axial)
A   Schwenkung Werkzeugachse
B   Drehung Werkzeug
C   Drehung Werkstück

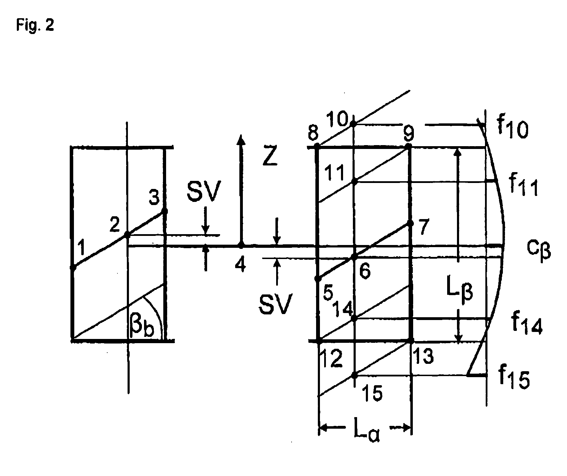

Die Flanken der hier betrachteten Zylinderräder werden, sofern keine Modifikationen vorhanden sind, von Evolventenschraubenflächen gebildet; diese sind zur Erläuterung quantitativer Zusammenhänge schlecht geeignet. Deshalb werden die Flanken im Folgenden in einer Tangentialebene an den Grundzylinder dargestellt (Fig. 2). Die geometrisch komplizierten Evolventenschraubenflächen gehen dabei über in Rechtecke mit den Kantenlängen $L_\alpha$ und $L_\beta$. Derartige Rechtecke werden im Folgenden als "Messfelder" bezeichnet.

Dreht man ein Rad um seine Achse, so beschreiben die Durchstoßpunkte von Schraubenlinien im Messfeld vertikal verlaufende Geraden. Stirnschnitte durch das Zahnrad beschreiben horizontal verlaufende Geraden. Die Berührpunkte zwischen einem schneckenförmigen Werkzeug und einer einwandfrei bearbeiteten Flanke liegen ebenfalls auf einer Geraden, der Erzeugungsberührspur. Diese ist gegenüber dem Stirnschnitt unter dem Winkel $\beta_b$ geneigt, solange der Axialvorschub klein ist. Diese Voraussetzung ist bei den hier betrachteten Anwendungsfällen gegeben. Notfalls lässt sich der Einfluss des Vorschubes auf den Neigungswinkel über bekannte Zusammenhänge berechnen und für die weiteren Betrachtungen der korrekte Winkel verwenden.

Die in Fig. 2 schräg über die Flanke verlaufenden Geraden 1,2,3 und 5,6,7 sind Erzeugungsberührspuren. Hält man die Erzeugungsberührspuren der Linksflanken L und der Rechtsflanken R über die durch den Punkt 4 verlaufende Linie starr miteinander verbunden und bewegt den Punkt 4 in Richtung Z, so beschreiben die Geraden die Geometrie der entstehenden Flanken. Hebt man nun während der Bewegung des Punktes 4 in Richtung Z den Punkt und damit die Erzeugungsberührspuren entsprechend dem Verlauf der im rechten Teil der Darstellung angegebenen Balligkeitskurve, so beschreiben die Erzeugungsberührspuren jeweils eine geschlossene Fläche über dem Messfeld der Links- bzw. der Rechtsflanke. Diese Flächen hüllen die erzeugten Flanken ein; sie stellen die Topographie der mit zylindrischem Werkzeug erzeugten breitenballigen Flanken dar.

Schneidet man eine dieser einhüllenden Flächen, z.B. die der Rechtsflanke, mit einer Stirnschnittebene, so stellt die Schnittlinie den Verlauf der Profilabweichung dieser Flanke in dem entsprechenden Stirnschnitt dar. Schneidet man die einhüllende Fläche mit einem Kreiszylinder konzentrisch zur Radführungsachse, oder, bezogen auf Fig. 2, mit einer Ebene senkrecht zum Messfeld und senkrecht zum Stirnschnitt, so stellt die Schnittlinie den Verlauf der Flankenlinienabweichung auf dem entsprechenden Zylinder dar. Die interessierenden Profil- bzw. Flankenlinienabweichungen lassen sich mit Hilfe eines Rechners nach dem hier erläuterten Verfahren zuverlässig bestimmen und aus den Abweichungsverläufen die jeweiligen Winkelabweichungen berechnen. Die Profil- oder die Flankenlinienabweichungen, jeweils in zwei Ebenen einer Flanke gemessen, werden benötigt, um die Schränkung einer Flanke zu bestimmen. Über die Profilwinkelabweichungen lässt sich die Schränkung $S_\alpha$ wie folgt berechnen:

$$S_\alpha = f_{H\alpha I} - f_{H\alpha II}$$

$f_{H\alpha I}$ bzw. $f_{H\alpha II}$ sind die Profilwinkelabweichungen in den Ebenen I bzw. II.

Für die weiteren Betrachtungen ist es sinnvoll, die Schränkung auf analytischem Wege zu bestimmen. Damit erhält man die Möglichkeit, die geometrischen Zusammenhänge besser zu verstehen und den Prozess sowie die benötigten Werkzeuge leichter auszulegen. In den meisten Fällen ist der geforderte Verlauf der Breitenballigkeit über eine quadratische Parabel beschreibbar. In diesen Fällen lässt sich die Schränkung einer Flanke berechnen aus der Höhe, die die einhüllende Fläche Ober bzw. unter den vier Eckpunkten des Messfeldes besitzt. Die vier Eckpunkte des Messfeldes der Rechtsflanke in Fig. 2 sind 8, 9, 13, 12. Alle Punkte einer Erzeugenden in Fig. 2 besitzen in guter Näherung dieselbe Höhe über bzw. unter dem Messfeld. Bezeichnet man diese Höhe jeweils mit f, so gilt:

$$f_{H\alpha I} = f_{11} - f_{10}$$

und

$$f_{H\alpha II} = f_{15} - f_{14}$$

Berechnet man die einzelnen Höhen über die den Verlauf der Breitenballigkeit des Werkstückes beschreibende quadratische Parabel, so lässt sich für die Schränkung der Flanke eine einfache Gleichung angeben. Berücksichtigt man, dass im vorliegenden Fall die Balligkeit entsprechend dem Stand der Technik erzeugt wurde, so lässt sich die hier berechnete Schränkung als natürliche Schränkung $S_{nat}$ bezeichnen. Es gilt:

$$S_{nat} = k_1 \cdot c_\beta$$

$k_1$ ist eine Konstante, die sich aus der vorstehend erläuterten Berechnung ergibt.

Aufgrund des Spurversatzes SV sind die Hochpunkte der Balligkeiten auf Links- bzw. Rechtsflanken um 2 * SV in Achsrichtung des Werkstückes 2 versetzt. Dies führt zu einer Flankenlinien-Winkelabweichung auf beiden Flanken. Diese Abweichungen lassen sich berechnen und über entsprechende Korrektureinstellungen an der Maschine beseitigen bzw. vermeiden.

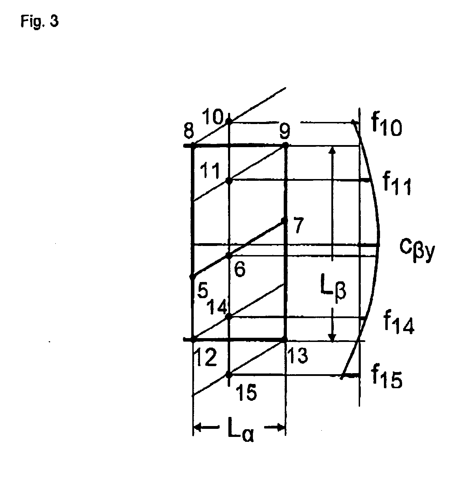

Setzt man zur Erzeugung einer Werkstückballigkeit ein schneckenförmiges Werkzeug ein, das in Richtung seiner Drehachse ballig modifiziert ist, so entsteht beim Arbeiten im Diagonalverfahren ebenfalls eine Schränkung. Die Berechnung dieser Schränkung ist nicht so einfach wie die Berechnung der natürlichen Schränkung. Die folgenden Betrachtungen betreffen den Einsatz eines hohlballigen Werkzeuges beim Bearbeiten der Rechtsflanke einer rechtsschrägen Verzahnung im Diagonalverfahren. Der Abstand zwischen Werkzeug und Werkstück ist konstant. Bei der Transformation der Erzeugungsberührspuren auf die Zeichenebene erhält man wieder gerade Linien, die unter $\beta_b$ zum Stirnschnitt geneigt sind. Die Erzeugungsberührspuren verlaufen jedoch senkrecht zum Messfeld nicht geradlinig; sie lassen sich vielmehr als Teil der in das Werkzeug eingebrachten Balligkeit und damit als Teil eines Parabelbogens beschreiben. In Fig. 3 ist die Balligkeit des Werkzeuges in die Zeichenebene geklappt.

Da das Bearbeiten im Diagonalverfahren erfolgt, besitzen alle Erzeugungsberührspuren in unterschiedlichen Z-Positionen senkrecht zum Messfeld unterschiedlichen Verlauf. Dieser Verlauf lässt sich berechnen. Damit ist es möglich, den Prozess über einen Rechner zu simulieren, ähnlich wie dies im Zusammenhang mit der natürlichen Schränkung erläutert wurde, und die die Flanke einhüllende Modifikationsfläche zu berechnen. Über eine Auswertung des Verlaufes der Schnittlinien zwischen der einhüllenden Fläche und den Stirnschnitten in den Ebenen I bzw. II findet man $f_{HaI}$ bzw. $f_{HaII}$ und damit die Schränkung der Flanke.

Auch hier ist eine analytische Berechnung zu empfehlen. Die Schränkung soll wieder über den Abstand der einhüllenden Fläche über den vier Eckpunkten des Messfeldes ermittelt werden. Dazu muss die Zuordnung der Positionen des Werkzeuges zur Z-Position der jeweils interessierenden Erzeugungsberührspur bekannt sein. Für diese Zuordnung eignet sich das Diagonalverhältnis D. Es gilt:

$$D = \Delta y / \Delta z = (y_e - y_a) / (z_e - z_a).$$

$\Delta y$     Verschiebung des Werkzeuges in Richtung seiner Drehachse

$\Delta z$     Verschiebung des Werkzeuges in Richtung der Werkstückdrehachse

$y_e$     Endposition des Werkzeuges auf der Y-Achse

$y_a$     Anfangsposition des Werkzeuges auf der Y-Achse

$z_e$     Endposition des Werkzeuges auf der Z-Achse

$z_a$     Anfangsposition des Werkzeuges auf der Z-Achse

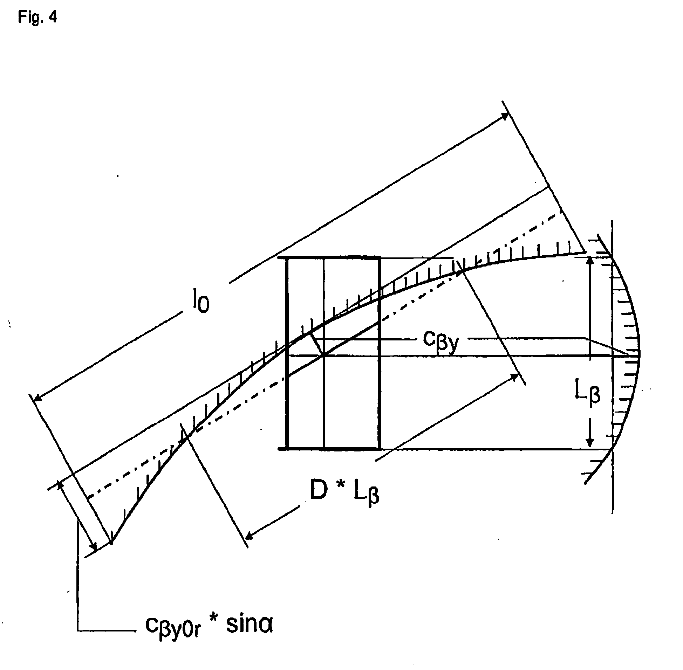

Positioniert man Werkzeug und Werkstück so, dass die Zahnbreitenmitte mit der Mitte des vorgesehenen Arbeitsbereiches der Schnecke zusammenfällt (Fig. 4), so ergibt sich bei bekanntem D eine eindeutige Zuordnung der Positionen von Werkzeug und Werkstück. Außerdem lässt sich bei bekannter Balligkeit des Werkzeuges, bezogen auf eine Strecke $\Delta y$, die am Werkstück entstehende Balligkeit $c_{\beta y}$ bestimmen.

Die aus $\Delta y$ resultierende Schränkung lässt sich wie folgt ermitteln: Man berechnet so, wie für die natürliche Schränkung erläutert, die Strecken $f_{10}$, $f_{11}$, $f_{14}$, $f_{15}$ in Fig.3. Abweichend von den Verhältnissen bei der natürlichen Schränkung liegen die Punkte 8, 9, 12, 13 jedoch nicht auf dem Niveau der Punkte 10, 11, 14, 15. In den Bereichen der Erzeugungsberührspuren zwischen den Punkten 8 und 10, 9 und 11, 12 und 14, 13 und 15 sind zusätzliche Höhenänderungen über den Verlauf der Balligkeit des Werkzeuges zu bestimmen. Man erhält schließlich die aus der Werkzeuggeometrie im Diagonalverfahren resultierende Schränkung $S_{yR}$ der Rechtsflanke über die Gleichung

$$S_{yR} = c_{\beta y} \cdot k_1 + c_{\beta y} / (k_2 * D)$$

Die Konstante k1 ist von der Berechnung der natürlichen Schränkung, die beim Einsatz eines zylindrischen Werkzeuges entsteht, bekannt. Die Konstante $k_2$ ergibt sich als Zusammenfassung aller in der vorstehend erläuterten Rechnung auftretenden konstanten Größen. Aus der Gleichung zur Berechnung von $S_{yR}$ geht hervor: Die Breitenballigkeit des Werkzeuges erzeugt im Diagonalverfahren eine Breitenballigkeit $c_{\beta y}$ am Werkstück. Diese ruft eine Schränkung hervor, die genau so berechnet werden kann wie die natürliche Schränkung, die beim Einsatz eines zylindrischen Werkzeuges auftritt. Außerdem entsteht ein Anteil der Schränkung, der proportional zu $c_{\beta y}$ / D ist. Dieser Anteil ändert sein Vorzeichen, wenn man das Vorzeichen von D ändert.

Aus Vorstehendem lässt sich folgern:

- Man kann für das Arbeiten mit einem balligen Werkzeug im Diagonalverfahren die am Werkstück entstehende Balligkeit als Überlagerung zweier Anteile berechnen, von denen einer - $c_{\beta x}$ - über eine Änderung des Achsabstandes während der Bearbeitung, der andere - $c_{\beta y}$ - über ein ballig modifiziertes Werkzeug im Diagonalverfahren erzeugt wird. Es gilt:

$$c_\beta = c_{\beta x} + c_{\beta y}$$

- Die natürliche Schränkung, die aufgrund einer Balligkeit am Werkstück auftritt, ist unabhängig davon, wie die Balligkeit erzeugt wurde

$$S_{nat} = k_1 * c_\beta.$$

- Ein breitenballig ausgebildetes Werkzeug erzeugt im Diagonalverfahren neben einem Anteil der natürlichen Schränkung einen Anteil der Schränkung, der je nach Wahl des Vorzeichens von D die resultierende Schränkung vergrößert oder verkleinert. Über diesen Anteil, er wird im Folgenden mit $S_k$ bezeichnet, lässt sich die resultierende Schränkung "korrigieren". Es gilt:

$$S_k = c_{\beta y} / (k_2 * D)$$

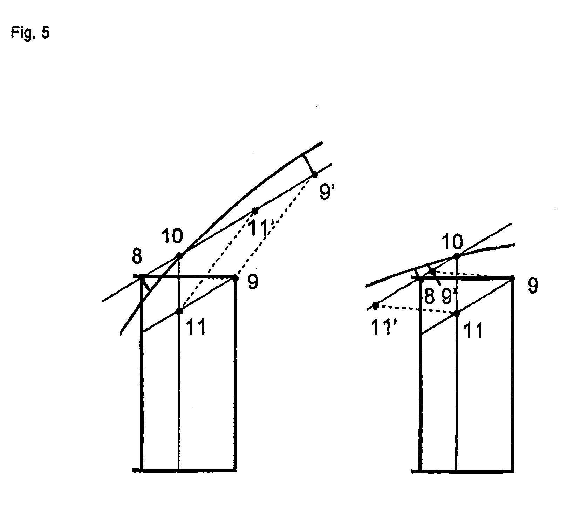

Anhand der Figur 5 soll veranschaulicht werden, wie die unterschiedlichen Anteile $S_k$ der Schränkung zustande kommen. Dargestellt ist für zwei Anwendungsfälle das Messfeld der Rechtsflanke einer rechtsschrägen Verzahnung. Eingezeichnet sind in der Draufsicht die Erzeugungsberührspuren durch die Eckpunkte 8 und 9 in der Ebene I. Eingezeichnet ist außerdem eine Ebene, die die Erzeugungsberührspur durch den Punkt 8 enthält und senkrecht zum Messfeld verläuft. Diese Ebene ist in die Tangentialebene geklappt, die das Messfeld enthält. Man erkennt deutlich den gekrümmten Verlauf der Werkzeugmodifikation. Im linken Teil der Darstellung arbeitet das Werkzeug in der Nähe des linken Schneckenendes, im rechten in der Nähe des rechten Schneckenendes. Um den Punkt 9 auszubilden, muss das jeweilige Werkzeug in Richtung der Werkstückachse auf eine kleinere Z-Position fahren und zusätzlich im linken Teil auf eine größere Y-Position und im rechten Teil auf eine kleinere Y-Position. Man erhält daraus für das Diagonalverhältnis im linken Teil der Darstellung D > 0 und im rechten Teil D <0.

Der Punkt 9 wird an der jeweiligen Stelle 9' des Werkzeuges ausgebildet. Ein Vergleich der an den jeweiligen Stellen 8 bzw. 9' des Werkzeuges vorliegenden Modifikation zeigt: In der Darstellung links entsteht in der Ebene I ein $f_{H\alpha} > 0$, in der Darstellung rechts ein $f_{H\alpha} < 0$. Stellt man die gleichen Überlegungen für die Ebene II an, so erkennt man, dass die $f_{H\alpha}$-Werte dort jeweils entgegengesetztes Vorzeichen aufweisen.

Der hier beschriebene Effekt kommt zustande, weil bei Ausbildung der Punkte 8 bzw. 9 im linken Teil der Darstellung der Punkt 8 weiter von der Maschinenmitte entfernt liegt als der Punkt 9' und weil der Betrag der Werkzeugmodifikation mit zunehmendem Abstand von der Werkzeugmitte zunimmt. Im rechten Teil der Darstellung liegt der Punkt 8 näher an der Werkzeugmitte als der Punkt 9'.

Im Zusammenhang mit dem Einsatz eines unmodifizierten bzw. eines ballig modifizierten Werkzeuges wurde erläutert, wie man die dabei jeweils entstehende Flankentopographie bestimmen kann. Überlagert man die für beide Fälle ermittelte Topographie, so erhält man die Topographie für den Standardanwendungsfall, in dem Breitenballigkeit und Schränkung eines Werkstükkes aus jeweils zwei Anteilen zusammengesetzt sind. Aus dieser "resultierenden" Topographie lassen sich die resultierenden Werte für Breitenballigkeit und Schränkung bestimmen.

Diese Vorgehensweise hat den Nachteil, dass die Zusammensetzung von Breitenballigkeit und Schränkung und damit die gesuchte Abstimmung der Anteile beider Größen bekannt sein muss. Ein weiterer Nachteil dieser Vorgehensweise besteht darin, dass nur Flankenlinienmodifikationen erfasst werden können, deren Verlauf über eine quadratische Parabel beschreibbar sind.

In diesem Zusammenhang ein Hinweis zur Schränkung: In der Einleitung der Beschreibung wurde die Schränkung als Maß für die Verwindung einer Flanke angegeben; sie wird berechnet als Differenz der Profil-Winkelabweichungen in den Ebenen I und II. Diese Festlegung ist nur sinnvoll, wenn die Änderung der Profil-Winkelabweichungen zwischen den Ebenen I und II proportional zum Abstand von diesen Ebenen erfolgt. Solange der Verlauf der geforderten Flankenliniemodifikation über der Zahnbreite durch eine quadratische Parabel beschrieben werden kann, ist diese Voraussetzung erfüllt. Ist diese Voraussetzung nicht erfüllt, sollte man den allgemeinen Begriff "Verwindung" der Flanken anwenden.

Um für Anwendungsfälle, die vom Standardfall abweichen, eine gegenüber dem Stand der Technik verbesserte Topographie zu erhalten, wird vorgeschlagen, eine an die gewünschte Flankengestalt angenäherte Topographie über eine Simulation des Fertigungsprozesses auf einem Rechner zu bestimmen. Dabei soll die Zahnbreite in mindestens zwei Bereiche unterteilt werden und in jedem dieser Bereiche Achsabstand und Diagonalverhältnis oder Achsabstand und Modifikation des Werkzeuges während der Axialschlittenverschiebung variabel gestaltet werden. Dabei sollen die Einflüsse der Änderung von Achsabstand und Diagonalverhältnis bzw. von Achsabstand und Werkzeugmodifikation auf die Erzeugungsberührspuren ermittelt, überlagert und iterativ so modifiziert werden, dass der geforderte Flanken-Linienverlauf und eine optimale Anpassung der Verwindung an die Vorgaben entsteht.

Die bisherigen Aussagen beziehen sich auf Rechtsflanken rechtsschräger Räder. Die bisherigen Aussagen zur Balligkeit gelten für alle Flanken, also für Links- und Rechtsflanken links- und rechtsschräger Verzahnungen. Für das Vorzeichen der natürlichen Schränkung gilt: Die natürliche Schränkung der Rechtsflanken rechtsschräger Verzahnungen und der Linksflanken linksschräger Verzahnungen ist positiv, die der übrigen Flanken ist negativ. Das Vorzeichen des Diagonalverhältnisses D zur Verringerung des Betrages der natürlichen Schränkung ist positiv für die Rechtsflanken rechtsschräger Verzahnungen und für die Linksflanken linksschräger Verzahnungen, es ist negativ für die übrigen Flanken.

Ein hohlballiges Werkzeug erzeugt im Diagonalverfahren am Werkstück eine positive Balligkeit. Ein balliges Werkzeug (von außen konvex) erzeugt ein hohlballiges Werkstück. In diesem Fall muss dem Werkstück normalerweise über die Achsabstandsänderung während der Bearbeitung eine große positive Balligkeit überlagert werden. Auch mit einem von außen konvexen Werkzeug lassen sich die vorstehend erläuterten Effekte erzielen. Man erhält jedoch gegenüber dem Einsatz eines hohlballigen Werkzeuges eine natürliche Schränkung mit entgegengesetztem Vorzeichen. Man muss auch das Vorzeichen von D umkehren, um den Betrag einer resultierenden Schränkung gegenüber der natürlichen Schränkung zu verringern.

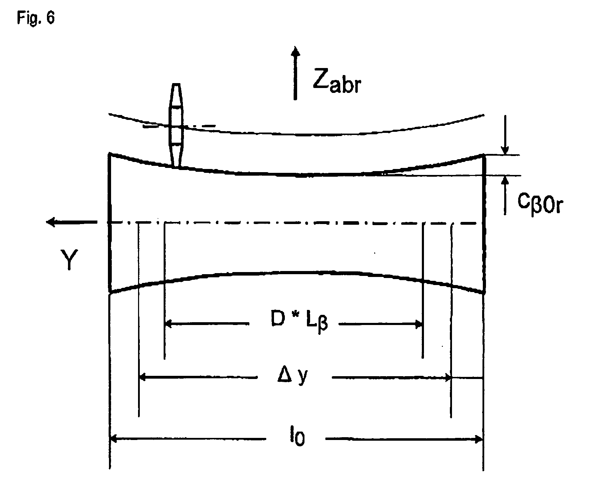

Ein besonders einfaches Verfahren zur Erzeugung der erforderlichen Werkzeugballigkeit eignet sich für abrichtbare Werkzeuge (Fig. 6). Man arbeitet mit einer diamantbelegten "Doppelkegelscheibe". Der Profiliervorgang unterscheidet sich vom Profilieren einer zylindrischen Schnecke nur dadurch, dass während der Verschiebung der Schnecke in Richtung ihrer Achse der Abstand zwischen Profilierscheibe und Schnecke geändert wird. In Schneckenmitte wird ein bestimmter Achsabstand verwirklicht und zu den beiden Schneckenenden hin entsprechend dem Quadrat des Abstandes von der Schneckenmitte vergrößert (positive Balligkeit) oder verkleinert (negative Balligkeit). Bei der Übertragung der Schneckenmodifikation, betrachtet im Axialschnitt des Werkzeuges, ist zu beachten, dass die Achsabstandsänderung beim Profilieren mit $\sin\alpha$ zu multiplizieren ist, um die Balligkeit auf den Flanken zu erhalten. Die Übertragung von Strecken von der Werkzeugachse auf die Werkstückachse erfolgt über das Diagonalverhältnis. In Fig. 6 ist die Verzahnung des Werkzeuges nicht dargestellt, sondern nur der Verlauf der Modifikation, stark vergrößert, die beim Profilieren des Werkzeuges im Achsschnitt erzeugt wird. Der Betrag der Hohlballigkeit ist $c_{\beta 0r}$.

Es gibt mehrere Möglichkeiten, eine sinnvolle Abstimmung zwischen den Größen $c_{\beta x}$, $c_{\beta y}$ und D zu ermitteln. Ein Weg dazu wird im Folgenden beschrieben: Man legt fest, dass die Abstimmung für die Rechtsflanke des Werkstückes vorgenommen wird. Man bestimmt den zum Bearbeiten des Werkstückes erforderlichen Axialweg $\Delta z$ einschließlich des aufmaßabhängigen Anteils und eines Sicherheitsbetrages S. Außerdem legt man den Weg $\Delta y = y_e - y_a$ fest, um den das Werkzeug in Richtung seiner Achse verschoben werden soll, während der Axialschlitten um $\Delta z = z_e - z_a$ verfährt. Die Indices a bzw. e kennzeichnen hier wieder Anfang bzw. Ende eines Tangential- bzw. Axialschlittenhubes. Es ist zu beachten, dass es nicht ausreicht, das Werkzeug über die Strecke $\Delta y$ zu profilieren; es ist vielmehr zusätzlich eine Strecke zu profilieren, die gleich der Länge der Profilausbildungszone $l_{P0}$ plus Sicherheitsbetrag ist. Der Sicherheitsbetrag erlaubt es, mit geänderten Einstelldaten am Werkstück die zu erzeugende Schränkung an neue Vorgaben anzupassen; dies ist vor allem bei nicht abrichtbaren Werkzeugen von Interesse. Es ist selbstverständlich, dass die insgesamt benötigte Werkzeuglänge nicht größer als die nutzbare Länge sein kann. Um jedoch einfache Verhältnisse für die Fertigung des Werkzeuges bzw. für das Abrichten zu erhalten, kann das Profilieren sich über die gesamte Länge $l_0$ des Werkzeuges erstrecken. In den folgenden Gleichungen kennzeichnet $S_{soll}$ den Sollwert der resultierenden Schränkung, $c_{\beta 0r}$ den betrag der Balligkeit des Werkzeuges im Achsschnitt für den Fall, dass es nach dem in Fig.6 vorgestellten Verfahren über die Länge $l_0$ profiliert wird. Bezeichnet man den Sollwert der Schränkung als $S_{soll}$, und profiliert man das Werkzeug nach dem in Fig.6 vorgestellten Verfahren über die gesamte Schneckenlänge $l_0$, so benötigt man auf dieser Länge einen Betrag der Balligkeit von $c_{\beta 0r}$. Zur Abstimmung sind noch folgende Größen zu berechnen:

- $$D = \Delta y / \Delta z$$

- $$S_{nat} = k_1 \cdot c_\beta$$

- $$S_k = S_{soll} - S_{nat}$$

- $$c_{\beta y} = k_2 \cdot D \cdot S_k$$

- $$c_{\beta x} = c_\beta - c_{\beta y}$$

- $$c_{\beta 0r} = c_{\beta y} / \sin\alpha \cdot ( l_0 /( D \cdot L_\beta ) )^2$$

Man beseitigt schließlich den Versatz der Hochpunkte der Breitenballigkeit über bekannte Maßnahmen, fertigt bzw. profiliert das Werkzeug entsprechend den vorstehenden Angaben und beginnt mit der Bearbeitung.

**Patentansprüche**

1. Verfahren zur Bearbeitung der Flanken im wesentlichen zylindrischer, aber breitenballig modifizierter Verzahnungen im Diagonal-Wälzverfahren unter Verwendung eines schneckenförmigen Werkzeuges, das in Richtung seiner Drehachse durch eine Änderung der Steigungshöhe seiner Flanken ballig modifiziert ist, wobei die Balligkeit positiv oder negativ sein kann,
bei dem die Balligkeit des Werkstücks durch eine Überlagerung eines Anteils, der im Diagonalverfahren aus der Balligkeit des Werkzeugs resultiert, und eines weiteren Anteils, der über eine Änderung des Achsabstandes zwischen Werkzeug und Werkstück während der Axialschlittenverschiebung erzeugt wird, entsteht

und bei dem eine dabei entstehende Schränkung durch eine Überlagerung eines natürlichen Anteils, der unabhängig davon ist, wie die Balligkeit erzeugt wurde, und eines vom Betrag und Verlauf der Balligkeit des Werkzeugs in Richtung seiner Drehachse sowie dem Diagonalverhältnis abhängigen weiteren Anteils entsteht,
**dadurch gekennzeichnet, daß** zur Erzeugung einer geforderten Balligkeit und einer geforderten Schränkung der natürliche Anteil der Schränkung aus der geforderten Balligkeit berechnet wird, der weitere Anteil der Schränkung durch eine Abstimmung der Balligkeit des Werkzeuges und des Diagonalverhältnisses, derart eingestellt wird, daß resultierend die geforderte Schränkung entsteht, und der weitere Anteil der Balligkeit über die Änderung des Achsabstands derart eingestellt wird, daß resultierend die geforderte Balligkeit entsteht.

2. Verfahren nach Anspruch 1,
**dadurch gekennzeichnet, dass** der Verlauf der Werkzeugballigkeit über der Werkzeuglänge durch eine quadratische Parabel beschreibbar ist.

3. Verfahren nach Anspruch 1 oder 2, bei dem mit einem vorhandenen Werkzeug, das über eine ausreichend große Länge profiliert ist, mit dem eine andere Balligkeit und/oder Schränkung erzeugt werden soll, als bei der Auslegung von Werkzeug und Prozess berücksichtigt wurde, **dadurch gekennzeichnet, dass** durch Anpassen des Diagonalverhältnisses und Anpassen des Achsabstandes während der Bearbeitung die gewünschen Werte von Breitenballigkeit und Schränkung erzeugt werden.

4. Verfahren nach einem der Ansprüche 1 bis 3,
**dadurch gekennzeichnet, dass** im Falle einer Einflankenbearbeitung die Änderung des Achsabstandes während der Bearbeitung ersetzt werden kann durch eine Änderung der Werkstückzusatzdrehung während der Bearbeitung oder durch eine Kombination von Achsabstandsänderung und Zusatzdrehung während der Bearbeitung.

5. Verfahren nach einem der Ansprüche 1 bis 4,
**dadurch gekennzeichnet, dass** im Falle einer Einflankenbearbeitung die Balligkeit des Werkzeuges, das Diagonalverhältnis und die Änderung des Achsabstandes während der Axialschlittenverschiebung bzw. die Änderung der Werkstückzusatzdrehung während der Axialschlittenverschiebung so vorgenommen werden können, dass unterschiedliche Werte für Balligkeit und/oder Schränkung auf beiden Werkstückflanken entstehen.

## Claims

1. A method of machining the flanks of substantially cylindrical, but crowned modified gear teeth by the diagonal milling method using a worm-like tool that is modified by crowning in the direction of its axis of rotation by changing the pitch of its flanks, the crowning being positive or negative,

   wherein the crowning of the workpiece results from the superimposing of one portion, which results in the diagonal process from the crowning of the tool, and of a further portion that is produced by changing the centre distance between the tool and the workpiece during the axial slide displacement,

   and wherein a thereby generated twist is produced by the superimposing of a natural portion which is independent of how the crowning was produced, and of a further portion dependent upon the amount and path of the crowning of the tool in the direction of its axis of rotation and the diagonal ratio, **characterised in that** in order to produce a required crowning and a required twist, the natural portion of the twist is calculated from the required crowning, the further portion of the twist is set by matching the crowning of the tool and of the diagonal ratio such that the required twist results, and the further portion of the crowning is set by the change to the centre distance such that the required crowning results.

2. The method according to Claim 1, **characterised in that** the path of the tool crowning over the length of the tool can be described by a quadratic parabola.

3. The method according to Claim 1 or 2, wherein with an available tool that is profiled over a sufficiently great length, with which a different crowning and/or twist than was taken into account in the design of the tool and the process is to be produced, **characterised in that** by adjusting the diagonal ratio and adjusting the centre distance during machining, the desired crowning and twist values are produced.

4. The method according to any of Claims 1 to 3, **characterised in that** in the case of single-flank machining changing the centre distance during machining can be replaced by changing the additional workpiece rotation during machining or by a combination of changing the centre distance and additional rotation during machining.

5. The method according to any of Claims 1 to 4, **characterised in that** in the case of single-flank machining the crowning of the tool, the diagonal ratio and changing the centre distance during the axial slide displacement or changing the additional workpiece rotation during the axial slide displacement can be implemented such that different values are produced for crowning and/or twist on both workpiece flanks.

## Revendications

1. Procédé d'usinage des flancs de dentures sensiblement cylindriques mais dont le bombage est modifié dans la largeur, lors d'un procédé de taillage diagonal par génération faisant appel à un outil hélicoïdal dont le bombage est modifié dans le sens de l'axe de rotation du fait d'une modification du pas hélicoïdal de ses flancs, le bombage pouvant être convexe ou concave,

   dans lequel le bombage de la pièce à usiner est produit par la superposition d'une composante produite à partir du bombage de la pièce à usiner lors du procédé de taillage diagonal, et d'une autre composante produite par la modification de l'entraxe entre l'outil et la pièce à usiner au cours du déplacement du chariot axial,

   et dans lequel une inclinaison torsion ainsi produite résulte d'une superposition d'une composante naturelle qui est indépendante de la manière avec laquelle le bombage a été produit, et d'une autre composante qui dépend de la quantité et du tracé du bombage de l'outil dans le sens de son axe de rotation ainsi que du rapport diagonal, **caractérisé en ce que**, pour produire un bombage requis et une inclinaison requise, la composante naturelle de l'inclinaison est calculée à partir du bombage requis, l'autre composante de l'inclinaison est établie par un réglage du bombage de l'outil et du rapport diagonal de manière à donner lieu à l'inclinaison requise, et l'autre composante du bombage est établie grâce à la modification de l'entraxe de manière à donner lieu au bombage requis.

2. Procédé selon la revendication 1, **caractérisé en ce que** le tracé du bombage de l'outil peut être décrit sur la longueur de l'outil par une parabole quadratique.

3. Procédé selon la revendication 1 ou 2, comportant un outil qui est profilé sur une longueur suffisante et servant à produire un autre bombage et/ou une autre inclinaison que ceux considérés lors de la conception de l'outil et du processus, **caractérisé en ce que** le réglage du rapport diagonal et le réglage de l'entraxe lors de l'usinage permettent d'obtenir les valeurs souhaitées en termes de bombage d'hélice et d'inclinaison.

4. Procédé selon l'une des revendications 1 à 3, **caractérisé en ce que**, dans le cas d'un usinage sur un flanc, la modification de l'entraxe lors de l'usinage peut être remplacée par une modification de la rotation supplémentaire de la pièce à usiner au cours de l'usinage ou par une combinaison de modification d'entraxe et de rotation supplémentaire au cours de l'usinage.

5. Procédé selon l'une des revendications 1 à 4, **caractérisé en ce que**, dans le cas d'un usinage sur un flanc, le bombage de l'outil, le rapport diagonal et la modification de l'entraxe lors du déplacement du chariot axial ou bien la modification de la rotation supplémentaire de l'outil lors du déplacement du chariot axial peuvent être prévus de telle manière qu'il se produise des valeurs de bombage et/ou d'inclinaison différentes sur les deux flancs de la pièce à usiner.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3704607

- EP 1036624 A2